# FASCICULE DE BREVET EUROPEEN

(11) **EP 2 308 059 B1**
(45) Date de publication et mention de la délivrance du brevet: **30.11.2011**
(21) Numéro de dépôt: 09772546.9
(22) Date de dépôt: 03.07.2009
(51) Int. Cl.: G21C 19/07, G21C 19/40

(54) **RÂTELIER DE STOCKAGE D'ASSEMBLAGES DE COMBUSTIBLE NUCLÉAIRE, FRAIS OU IRRADIÉS.**
LAGERGESTELL FÜR FRISCHE ODER VERBRAUCHTE KERNBRENNSTOFFBAUGRUPPEN
STORAGE RACK FOR FRESH OR SPENT NUCLEAR FUEL ASSEMBLIES

(30) Priorité: 04.07.2008 FR 0854576
(43) Date de publication de la demande: 13.04.2011
(73) Titulaire: TN International, 78182 Montigny Le Bretonneux (FR)
(72) Inventeur: FOUSSARD, Guillaume, F-78320 Le Mesnil St Denis (FR); ANDRE, Régis, F-75015 Paris (FR)
(74) Mandataire: Ilgart, Jean-Christophe
(86) Numéro de dépôt international: PCT/EP2009/058436
(87) Numéro de publication internationale: WO 2010/000846

(56) Documents cités:
- EP-A- 0 175 140
- WO-A-99/07001
- DE-U1- 7 727 751
- FR-A- 2 759 484
- JP-A- 5 040 195
- US-A- 4 331 244

## Description

### DOMAINE TECHNIQUE

La présente invention se rapporte de façon générale au domaine des râteliers de stockage d'assemblages de combustible nucléaire, frais ou précédemment irradiés dans un réacteur nucléaire.

L'invention s'applique pour le stockage de tout type d'assemblages de combustible nucléaire, en particulier ceux destinés aux réacteurs à eau pressurisée (de l'anglais PWR : « Pressurized Water Reactor »).

### ETAT DE LA TECHNIQUE ANTERIEURE

Lorsque des assemblages de combustible nucléaire doivent être stockés, ils sont généralement placés dans des râteliers de stockage, immergés dans des piscines. Ces râteliers présentent habituellement une structure rigide ou « ossature » définissant une pluralité de cavités ou « alvéoles », parallèles entre elles et orientées verticalement lorsque le râtelier se trouve immergé en piscine. Au moins certaines de ces alvéoles reçoivent une chemise définissant un logement pour la réception d'un assemblage de combustible nucléaire. Afin de réduire le plus possible les distances entre chaque alvéole et ainsi accroître la capacité de stockage du râtelier, tout en garantissant la sous-criticité de ce dernier lorsqu'il est chargé d'assemblages de combustible nucléaire, cette chemise présente un pouvoir d'absorption des neutrons, tel que cela est décrit dans le document FR 2 759 484. Pour ce faire, des plats en matériau dit « neutrophage » sont employés, tel que de l'acier inoxydable boré. Par ailleurs, une lame d'eau est présente entre l'alvéole de la structure rigide et sa chemise associée, permettant, en association avec le matériau neutrophage, d'éviter tout risque de criticité.

Classiquement, l'alvéole, la chemise et l'assemblage de combustible nucléaire présentent, en section, une même forme générale, habituellement carrée, mais plus généralement polygonale.

Dans le document FR 2 759 484, la conception des chemises est relativement simple, mais peut s'avérer problématique, compte tenu du fait que l'assemblage combustible est en contact direct avec les plats en matériau neutrophage. Cette situation traduit en effet un risque important d'endommagement par rayures des plats en matériau neutrophage lors des opérations de chargement et déchargement des assemblages dans le logement.

De plus, les plats neutrophages doivent être crénelés sur leur bord de manière à garantir leur maintien en position. Par rapport à des plats à bords droits, ces créneaux nécessitent des opérations supplémentaires de fabrication et de contrôle qui ne permettent pas de satisfaire pleinement les critéres économiques.

Dans le document EP 0 175 140 A1, des chemises sont également insérées dans des alvéoles. Néanmoins, le concept présenté dans ce document présente l'inconvénient d'utiliser un matériau neutrophage nécessitant son confinement entre des tôles, compliquant sensiblement la fabrication des chemises.

Dans le document JP 05 040195 A (Toshiba Engineering Co), les chemises sont formées par des tubes ajourés, les plats neutrophages étant positionnés dans les parties ajourées. L'épaisseur des parois formant les tubes doit alors être au moins égale à celle des plats neutrophages, ce qui ne permet pas d'optimiser leur épaisseur et donc de respecter les critéres de masse. De plus, les tubes sont réalisés par des opérations de façonnage coûteuses de manière à pouvoir recevoir les plats neutrophages dans les parties ajourées. Enfin, les plats neutrophages subissent des discontinuités sur une longueur au moins égale à plusieurs fois leur épaisseur au niveau des éléments maintenant en position les profilés du tube, ce qui nuit aux performances des chemises d'un point de vue criticité en facilitant l'interaction neutronique entre assemblages combustibles adjacents.

### EXPOSÉ DE L'INVENTION

L'invention a donc pour but de remédier au moins partiellement aux inconvénients mentionnés ci-dessus, relatifs aux réalisations de l'art antérieur. Plus spécifiquement, l'invention a pour but de prévoir un râtelier de stockage d'assemblages de combustible nucléaire offrant simultanément une résistance mécanique élevée, une faible masse globale, ainsi qu'une conception assurant une fabrication et un montage aisés.

Pour ce faire, l'invention a pour objet un râtelier de stockage d'assemblages de combustible nucléaire, comprenant une structure rigide définissant une pluralité d'alvéoles adjacentes s'étendant parallèlement à une direction longitudinale du râtelier, ledit râtelier comprenant en outre, dans au moins certaines desdites alvéoles et de préférence dans chacune d'elles, une chemise définissant un logement s'étendant parallèlement à ladite direction longitudinale, et destiné à recevoir un assemblage de combustible nucléaire, ladite chemise présentant, en section orthogonale à ladite direction longitudinale, une forme générale polygonale dont au moins certains des côtés, et de préférence chacun d'eux, comprennent des plats en matériau neutrophage. Selon l'invention, ladite chemise comporte en outre :
- des profilés formant chacun cornière, espacés les uns des autres et s'étendant parallèlement à ladite direction longitudinale en étant agencés au niveau d'au moins plusieurs angles de ladite section de forme générale polygonale, lesdits profilés servant de support de montage auxdits plats en matériau neutrophage et présentant une surface intérieure de définition dudit logement permettant de guider un assemblage de combustible nucléaire lors de son chargement dans ledit logement, ainsi qu'une surface extérieure opposée à ladite surface intérieure et sur laquelle lesdits plats en matériau neutrophage sont en appui ; et
- des moyens de maintien desdits profilés entre-eux, lesdits moyens de maintien assurant un centrage de la chemise dans l'alvéole du râtelier et comprenant une pluralité de structures de maintien entourant lesdits profilés et espacées les unes des autres selon la direction longitudinale.

Ainsi, la solution proposée, en particulier du fait de la présence des profilés formant chacun cornière, permet avantageusement d'obtenir à la fois une faible masse globale, une conception assurant une fabrication et un montage aisés, ainsi qu'une résistance mécanique élevée. D'autre part, la surface intérieure des profilés permet donc de guider l'assemblage de combustible nucléaire lors de son chargement dans le logement et lors de son déchargement, et, surtout, empêche le contact entre l'assemblage et les plats en matériau neutrophage, durant de telles opérations. Ainsi, outre le fait que le guidage s'effectue de manière astucieuse avec de préférence uniquement les profilés espacés les uns des autres, le risque d'endommagement par rayures des plats durant le chargement et le déchargement de l'assemblage est avantageusement réduit à néant tout en satisfaisant les critères de masse concernant les chemises. En outre, avec les structures de maintien entourant les profilés, cela permet de positionner de façon extrêmement précise les profilés les uns par rapport aux autres, assurant ainsi une géométrie parfaitement maîtrisée du logement. La liaison entre ces éléments est préférentiellement assurée par soudage, même si d'autres techniques sont envisageables, sans sortir du cadre de l'invention.

De préférence, chaque structure de maintien présente une forme générale sensiblement identique à ladite forme générale polygonale.

De préférence, chaque profilé prend, en section orthogonale à la direction longitudinale, une forme de L ou de V. Préférentiellement, chaque profilé s'étend sur sensiblement toute la longueur de la chemise, qui s'étend, elle, de préférence sur sensiblement toute la longueur de l'alvéole du râtelier dans laquelle elle se trouve. A titre indicatif, il est noté que chaque chemise, une fois réalisée, prend la forme d'un ensemble d'une seule pièce capable d'être placé dans l'alvéole.

Toujours dans le souci d'augmenter la rigidité globale de la chemise, chaque profilé est préférentiellement métallique, de préférence en acier inoxydable.

De préférence, chaque plat est réalisé dans un matériau composite à matrice métallique (de l'anglais MMC : « Metallic-Matrix Composite ») comprenant du bore, de préférence sous forme de carbure de bore, mais peut bien évidemment être réalisé dans tout autre matériau neutrophage, tels que l'aluminium boré, ou l'acier inoxydable boré.

De préférence, chaque plat est monté sur deux profilés directement consécutifs, à l'aide de pattes de maintien prévues sur les profilés. Ces pattes peuvent être rapportées fixement sur les profilés, par exemple par soudage, ou bien être obtenues par poinçonnement desdits profilés. Ainsi, lors du montage, les plats peuvent être assemblés par glissement entre les surfaces extérieures de ces profilés et lesdites pattes, le glissement s'effectuant de préférence dans la direction longitudinale. D'une manière générale, les pattes permettent non-seulement un plaquage des plats contre les profilés, un jeu entre les profilés et les plats étant néanmoins possible, mais forment également des butées en translation, selon la direction de la largeur des plats.

Selon un mode de réalisation préféré, chaque face de ladite chemise présente une pluralité de plats en matériau neutrophage, adjacents selon la direction longitudinale. Ainsi, cette configuration est dite tronçonnée, en ce sens que plusieurs plats agencés dans la continuité les uns des autres participent à la formation d'une même face de la chemise. Cela procure des facilités de fabrication, de manutention et de montage des plats, et permet d'obtenir une parfaite planéité. De plus, la configuration tronçonnée permet de placer des plats seulement aux endroits de la chemise où une absorption neutronique est nécessaire, et non nécessairement de façon continue sur toute la longueur de la chemise. Néanmoins, une solution dans laquelle chaque face de la chemise ne présente qu'un même et unique plat en matériau neutrophage est envisageable, sans sortir du cadre de l'invention, comme cela sera détaillé ci-après.

Dans le cas d'une configuration tronçonnée, on fait de préférence en sorte que chaque plat s'étende entre deux structures de maintien directement consécutives dans la direction longitudinale, ces structures formant butée pour ledit plat dans cette même direction, de préférence dans les deux sens. Dans ce cas, chaque plat dispose alors d'une longueur sensiblement égale à la distance séparant les deux structures de maintien entre lesquelles il se situe, de manière à pouvoir être retenu en butée comme mentionné ci-dessus.

Alternativement, chaque plat peut avoir une longueur inférieure, n'impliquant aucune butée contre les structures de maintien agencées à distance du plat.

Quoiqu 'il en soit, dans cette configuration tronçonnée, les structures de maintien entourent les profilés en contactant leur surface extérieure, sans entourer les plats qu'ils séparent le long de la direction longitudinale.

Selon un mode de réalisation encore plus préféré, lesdites structures de maintien sont fixées en appui sur la surface extérieure desdits profilés, et au moins l'un desdits plats s'étend de part et d'autre d'au moins l'une desdites structures de maintien selon la direction longitudinale, en passant dans un renfoncement pratiqué dans cette structure. Par conséquent, chaque plat concerné est logé entre la face extérieure des cornières sur lesquelles il est plaqué, et le renfoncement pratiqué dans la structure de maintien. De plus, le plat peut être amené à cheminer à travers le renfoncement de plusieurs structures de maintien consécutives selon la direction longitudinale. A cet égard, il est noté qu'un seul plat est préférentiellement prévu pour chaque face de la chemise, en s'étendant sur toute ou partie de la longueur des profilés selon la direction longitudinale.

Ce mode de réalisation présente des avantages notables en termes de fabrication, notamment en ce sens qu'il ne nécessite le glissement que d'un seul plat par face, entre les profilés et les structures de maintien de ces derniers.

En outre, cette configuration permet une circulation naturelle de l'eau sur la hauteur du râtelier, pour un meilleur refroidissement. En effet, l'eau peut facilement transiter par les jeux prévus entre les plats et les renfoncements pratiqués dans les structures de maintien des profilés. Elle permet aussi d'éviter la présence de bulles d'air qui resteraient coincées dans la structure du râtelier après le remplissage en eau de la piscine, ce qu'il faut naturellement éviter afin d'être certain que le râtelier se trouve bien dans une configuration maîtrisée d'un point de vue criticité.

De préférence, la largeur de chaque plat est strictement inférieure à la largeur de la face de la chemise qu'il forme partiellement. Cette spécificité provient de la constatation que le matériau neutrophage positionné dans les angles de la chemise n'a qu'une efficacité limitée vu la faible interaction neutronique entre deux assemblages positionnés selon la diagonale des alvéoles du râtelier. Le matériau neutrophage étant particulièrement onéreux, une telle solution prévoyant une largeur de plats strictement inférieure à la largeur de la face de la chemise aide par conséquent à satisfaire d'une part les critères économiques, et d'autre part le critère de masse, tout en assurant le maintien de la sous-criticité du râtelier lorsqu'il est chargé d'assemblages de combustible nucléaire. Néanmoins, ici encore, une solution où les plats présentent une largeur identique à celle de la face de la chemise est envisageable.

Comme mentionné ci-dessus, lesdits moyens de maintien desdits profilés entre-eux sont en appui sur la surface latérale délimitant ladite alvéole du râtelier dans laquelle se trouve ladite chemise associée.

De préférence, chaque structure de maintien est agencée dans un plan sensiblement orthogonal à la direction longitudinale.

Ces structures assurent ainsi un très bon centrage de la chemise dans l'alvéole du râtelier, permettant de former une lame d'eau tout autour de la chemise, entre celle-ci et la surface latérale délimitant l'alvéole du râtelier logeant la chemise, cette lame permettant, en association avec le matériau neutrophage, d'éviter tout risque de criticité.

Enfin, il est noté que ladite forme générale polygonale est préférentiellement une forme générale carrée ou une forme générale hexagonale.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective, partiellement éclatée, d'un râtelier de stockage selon un mode de réalisation préféré de la présente invention ;
- la figure 2 représente une vue partielle en perspective d'une chemise équipant le râtelier montré sur la figure 1 ;
- la figure 3 représente une vue en coupe transversale de la chemise montrée sur la figure 2, selon un plan transversal passant à distance des pattes de maintien des plats en matériau neutrophage, et à distance des moyens de maintien des profilés formant chacun cornière ;
- la figure 4 représente une autre vue en coupe transversale de la chemise montrée sur la figure 2, selon un plan transversal passant par des pattes de maintien des plats en matériau neutrophage ;
- la figure 5 représente une autre vue en coupe transversale de la chemise montrée sur la figure 2, selon un plan transversal passant par des moyens de maintien des profilés ;
- la figure 6 représente une vue similaire à celle de la figure 5, avec le râtelier de stockage se présentant sous la forme d'un mode de réalisation encore plus préféré de la présente invention ; et
- la figure 7 représente une vue en perspective de la chemise montrée sur la figure 6.

### EXPOSÉ DÉTAILLÉ DE MODES DE RÉALISATION PRÉFÉRÉS

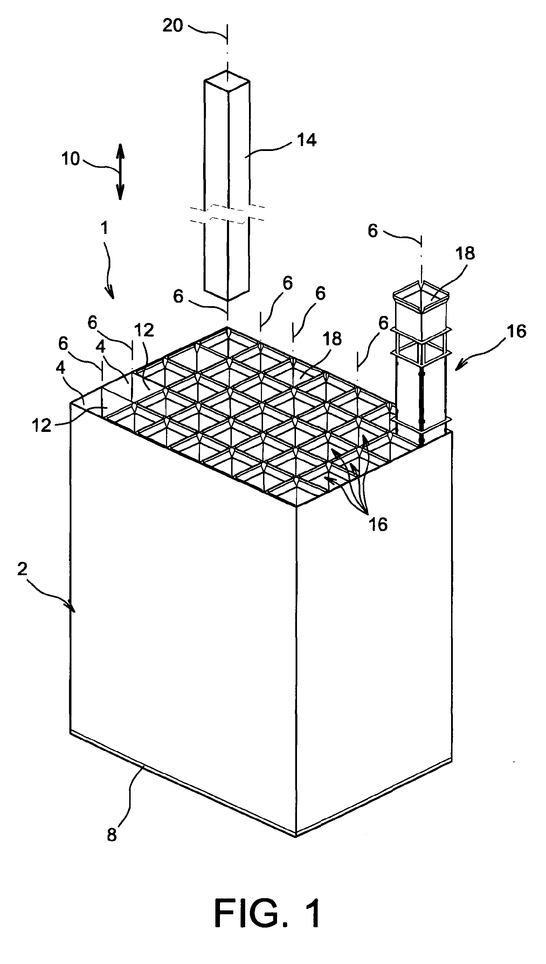

Tout d'abord en référence à la figure 1, on peut voir un râtelier de stockage 1 d'assemblages de combustible nucléaire, frais ou précédemment irradiés dans un réacteur nucléaire, le râtelier étant destiné à être immergé en piscine.

Sur cette figure, on peut apercevoir que le râtelier 1 présente tout d'abord une structure rigide ou « ossature » 2, définissant une pluralité de cavités ou « alvéoles » 4 parallèles entre elles, et d'axes 6 orientés verticalement lorsque le râtelier 1 se trouve immergé en piscine, avec le fond 8 de la structure 2 reposant dans le fond de la piscine. Dans cette position montrée sur la figure, les axes 6, parallèles à la direction longitudinale 10 du râtelier, sont donc agencés verticalement.

Les alvéoles 4, habituellement prévues en grand nombre, tel que plusieurs dizaines, peuvent être obtenues de toutes façons connues de l'homme du métier, comme celle visant à prévoir des tôles principales parallèles entre elles, séparées par des tôles entretoises leur étant disposées orthogonalement. Cela conduit à des alvéoles 4 sensiblement cylindriques, chacune délimitée par une surface latérale 12 disposant, en section transversale, à savoir en section orthogonale à la direction longitudinale 10, d'une forme générale carrée correspondant à un mode de réalisation préféré de la présente invention. Néanmoins, il est noté que d'autres formes polygonales sont bien entendu possibles.

D'une manière générale, il est prévu que cette structure rigide 2, dont les alvéoles 4 sont ouvertes en partie supérieure pour le chargement et le déchargement des assemblages de combustible nucléaire 14 tel que cela a été représenté schématiquement sur la figure 1 pour l'une des alvéoles, est réalisée en acier inoxydable.

Les assemblages de combustible 14 ne sont néanmoins pas directement introduits dans leurs alvéoles 4 associées. En effet, pour chaque alvéole 4 destinée à recevoir un assemblage 14, il est de plus prévu un ensemble neutrophage agencé dans cette alvéole, cet ensemble prenant la forme d'une chemise 16, dont l'une a été volontairement partiellement extraite de son alvéole sur la figure 1. Chaque chemise 16 présente donc un logement 18 destiné à recevoir un assemblage de combustible nucléaire 14, ce logement 18 sensiblement cylindrique disposant, en section transversale, d'une forme générale préférentiellement carrée. De plus, l'axe de ce logement 18 est confondu avec l'axe 6 de son alvéole associée, cet axe 6 étant également destiné à être confondu avec l'axe 20 de l'assemblage lorsque celui-ci est placé dans son logement 18.

De préférence, chaque alvéole 4 est pourvue d'une chemise neutrophage 16, même si il pourrait en être autrement, sans sortir du cadre de l'invention. De plus, il est indiqué que les longueurs, selon la direction 10, d'une alvéole 4, de sa chemise associée 16 et du logement 18 de cette chemise, sont de préférence sensiblement identiques, à savoir de l'ordre de grandeur de la longueur de l'assemblage de combustible nucléaire 14 destiné à être stocké.

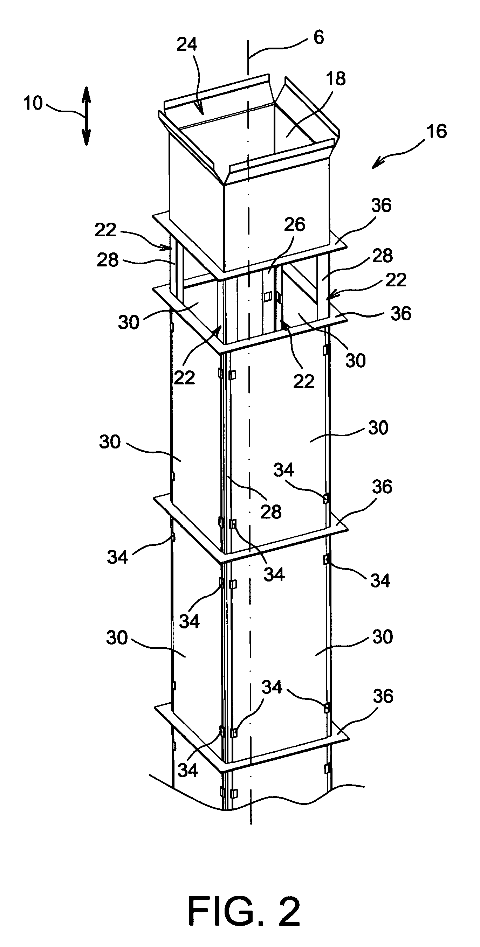

En référence à présent aux figures 2 à 5, il va être décrit la conception de l'une des chemises 16, étant entendu qu'elles sont toutes de conceptions identiques ou similaires.

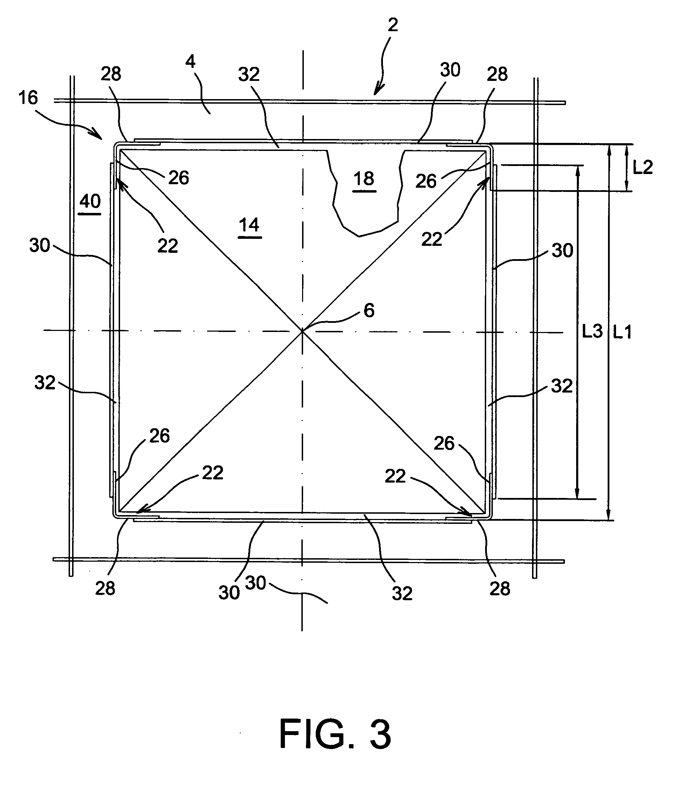

Tout d'abord, il est indiqué que la chemise 16 présente, en section transversale, une forme générale préférentiellement carrée, comme cela est visible sur la figure 3. Par conséquent, cette section transversale présente quatre côtés jointifs correspondant respectivement aux quatre faces jointives de la chemise montrée sur la figure 2.

La chemise 16 dispose, de préférence au niveau de chacun des quatre angles de la section de forme générale carrée, d'un profilé 22 formant cornière. Ces quatre profilés, agencés parallèlement à la direction longitudinale 10, s'étendent chacun de préférence sur sensiblement toute la longueur de la chemise. Néanmoins, comme montré sur la figure 2, un ensemble formant entonnoir 24 faisant partie intégrante de la chemise 16 peut être placé en saillie sur l'extrémité supérieure des profilés 22, de manière à faciliter le centrage de l'assemblage du combustible, lors de son chargement dans le logement 18. Cet entonnoir 24 présente alors une extrémité supérieure élargie formant l'extrémité haute du logement 18, et destinée à être au contact de la surface latérale 12 de l'alvéole associée 4.

Les profilés 22, réalisés en acier inoxydable, présentent chacun une section à deux branches en forme de L, avec de préférence les deux branches de même longueur.

Chaque profilé 22 présente une surface intérieure 26 de définition du logement 18, cette surface en L correspondant à celle orientée vers l'intérieur de la chemise. De plus, chaque profilé 22 présente une surface extérieure 28 opposée à la surface intérieure 26, cette surface en L étant quant à elle orientée vers les alvéoles adjacentes.

Les surfaces extérieures 28 sont prévues pour supporter des plats en matériau neutrophage, comme cela va à présent être décrit. En effet, chaque côté de la section de forme générale carrée est réalisée à l'aide d'un plat en matériau neutrophage 30, de préférence réalisé dans un matériau composite à matrice métallique comprenant du bore, mais pouvant alternativement être réalisé dans tout autre matériau neutrophage, tels que l'aluminium boré, ou l'acier inoxydable boré.

Comme mentionné ci-dessus, les plats 30 sont maintenus en appui sur la surface extérieure 28 des profilés 22, de préférence en étant en contact direct avec ces surfaces 28. Ainsi, le guidage de l'assemblage de combustible, lors de son chargement et de son déchargement, s'effectue de manière astucieuse avec uniquement les profilés 22 formant chacun cornière, et plus spécifiquement avec la surface intérieure 26 de ces derniers. En revanche, la surface intérieure des plats 30 reste donc sans contact avec l'assemblage 14 durant ces opérations ainsi que durant le stockage, comme cela a été schématisé sur la figure 3 avec les espaces vides 32 entre la surface intérieure des plats 30 et la paroi latérale de l'assemblage 14. Par conséquent, le risque d'endommagement par rayures des plats 30 durant le chargement et le déchargement de l'assemblage est avantageusement réduit à néant.

Sur la figure 3, il a été référencé la largeur L1 d'un côté de la section, chaque côté étant donc réalisé à partir d'une première branche de l'un des profilés 22, d'un plat 30, et d'une seconde branche appartenant au profilé 22 directement consécutif, située dans le même plan que ladite première branche, étant entendu que le plat 30 est maintenu en appui contre chacune des première et seconde branches. Cette largeur L1 du côté de la section doit bien évidemment également être considérée comme la largeur de la face de la chemise à laquelle ce côté correspond. Il a également été référencé la largeur de branche L2, cette largeur étant de préférence identique pour les deux branches précitées. Enfin, il a été référencé la largeur L3 du plat 30.

De préférence, les dimensions sont retenues de manière à satisfaire les relations suivantes :
(i) : 0, 1 < L2/L1 < 0,4 ; et encore plus préférentiellement (i') : 0,05 < L2/L1 < 0,25 ; et
(ii) 0,75 < L3/L1 < 1

Les relations (i) et (i'), qui s'appliquent de préférence à chacun des côtés de la section, traduisent un espacement conséquent entre les profilés 22 directement consécutifs, tandis que la relation (ii) traduit la non-nécessité de prévoir les plats en matériau neutrophage sur toute la largeur des faces de la chemise, étant par ailleurs précisé que chaque plat 30 est préférentiellement centré sur son côté associé.

Comme le montre la figure 2, il est de préférence prévu qu'une même face de la chemise soit réalisée avec plusieurs plats 30 adjacents selon la direction longitudinale 10, et de préférence espacés les uns des autres, comme cela sera détaillé ci-après. Cette configuration dite tronçonnée selon la direction longitudinale permet de placer des plats en matériau neutrophage uniquement aux endroits de la chemise où une absorption neutronique est nécessaire, et non nécessairement de façon continue sur toute la longueur de la chemise. Par exemple, sur la figure 2, on peut apercevoir que la partie supérieure des faces de la chemise est dépourvue de tels plats, étant par ailleurs noté qu'il peut en être de même pour la partie inférieure des faces, ainsi qu'éventuellement pour toute autre partie de ces mêmes faces.

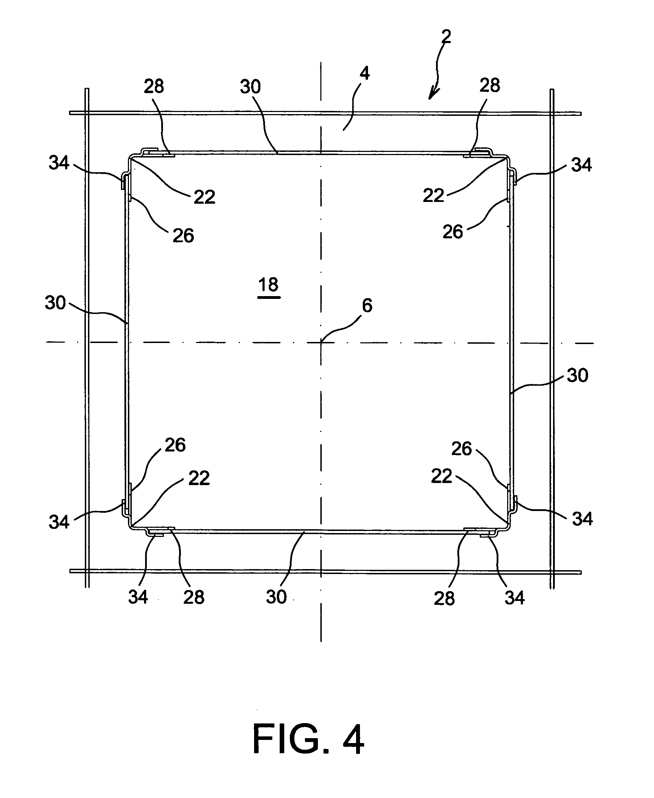

Comme visible sur les figures 2 et 4, chaque plat 30 est monté sur deux profilés directement consécutifs 22 à l'aide, de préférence, de pattes de maintien 34 obtenues par poinçonnement de ces profilés, ou rapportées fixement sur ceux-ci, par exemple par soudage. Chaque patte 34 définit alors, conjointement avec la surface extérieure 28 du profilé 22 concerné, une encoche dans laquelle est logé un chant longitudinal du plat à maintenir. Ainsi, lors du montage, les plats peuvent être assemblés par glissement entre les surfaces extérieures de ces profilés et les pattes, le glissement s'effectuant de préférence dans la direction longitudinale. Ces pattes 34, coopérant avec les deux chants longitudinaux opposés du plat 30 concerné, permettent non-seulement un plaquage du plat contre les profilés 22, mais forment également une butée en translation selon la direction de la largeur du plat, à savoir selon la direction orthogonale à la direction longitudinale 10 dans le plan de ce plat 30, dans les deux sens.

Par ailleurs, il est possible de resserrer les pattes 34 afin d'obtenir un pincement de forte intensité du plat 30 entre ces pattes 34 et la surface extérieure 28 des profilés, assurant ainsi également le blocage de ce plat dans la direction longitudinale 10.

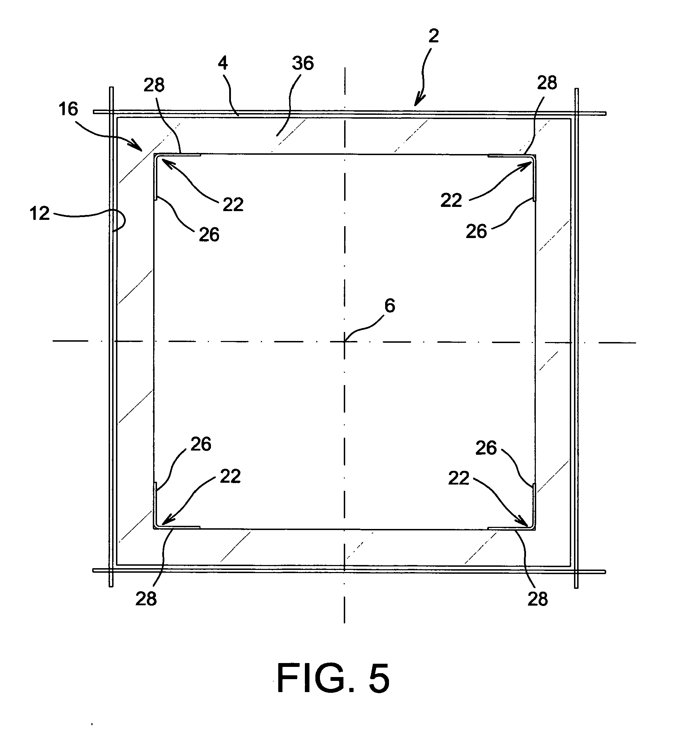

Néanmoins, pour le blocage des plats 30 dans cette dernière direction, vis-à-vis des profilés 22, il est préférentiellement retenu une solution de mise en butée de ces plats contre des moyens de maintien des profilés entre-eux. Ces moyens de maintien vont à présent être décrits, en référence plus spécifiquement aux figures 2 et 5.

Ils prennent chacun la forme d'une structure de maintien 36 agencée dans un plan sensiblement orthogonal à la direction longitudinale 10, et entourant les profilés 22 qu'ils contactent. Ils sont donc espacés les uns des autres selon cette dernière direction.

La liaison mécanique rigide entre ces structures 36 et les profilés 22 est préférentiellement assurée par soudage. Cela permet de positionner de façon extrêmement précise les profilés les uns par rapport aux autres, assurant ainsi une géométrie parfaitement maîtrisée du logement 18.

Comme visible sur les figures 2 et 5, les structures 36, de préférence réalisées en acier inoxydable, présentent chacune une forme générale sensiblement identique à la forme de la section transversale de la chemise, à savoir une forme générale carrée. Par conséquent, chaque structure 36 est assimilable à un cadre dont les angles logent, intérieurement, les profilés 22 de forme sensiblement complémentaire, un contact direct étant prévu entre la surface extérieure 28 des profilés 22 et l'intérieur des cadres, au niveau des angles de ces derniers. De préférence, les cadres sont fixés sur les profilés par soudure.

Dans le mode de réalisation préféré où les faces de la chemise sont tronçonnées, on fait en sorte que chaque plat 30 d'une même face s'étende entre deux cadres 36 directement consécutifs dans la direction longitudinale 10, ces deux cadres formant alors chacun butée pour le plat dans cette même direction, respectivement dans les deux sens. Pour ce faire, chaque plat 30 dispose alors d'une longueur sensiblement égale à la distance séparant les deux cadres 36 entre lesquels il se situe.

Les cadres 36, en contact avec les chants supérieurs et inférieurs des plats 30, sont également prévus pour assurer un centrage de la chemise 16 dans son alvéole 4, seul un jeu de montage étant retenu entre la périphérie des cadres 36 et la surface latérale 12 délimitant l'alvéole 4. Les cadres forment alors des entretoises qui ménagent une lame d'eau tout autour de la chemise, dans les espaces référencés 40 sur la figure 3, délimités dans la direction longitudinale par deux cadres 36 directement consécutifs, et latéralement par les faces de la chemise et la surface latérale 12 délimitant l'alvéole 4 logeant cette chemise.

Enfin, il est noté que les cadres 36 entourent les profilés 22 mais pas les plats 30.

A titre d'exemple indicatif, la fabrication d'une telle chemise 16, destinée à être ensuite introduite dans son alvéole 4 associée, peut consister en une fabrication par « étage », résidant dans la mise en place d'un premier cadre 36 autour des profilés prépositionnés, la fixation de ce premier cadre sur les profilés, l'assemblage par glissement, dans les encoches définies par les pattes 34, de quatre plats 30 fermant latéralement l'étage concerné de la chemise, puis la mise en place d'un second cadre 36 autour des profilés, au-dessus des plats précités, et ainsi de suite.

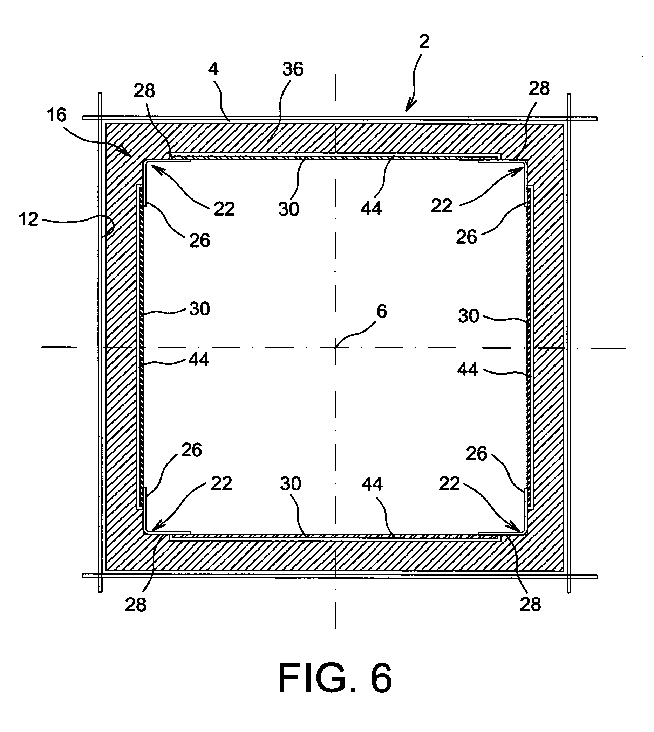

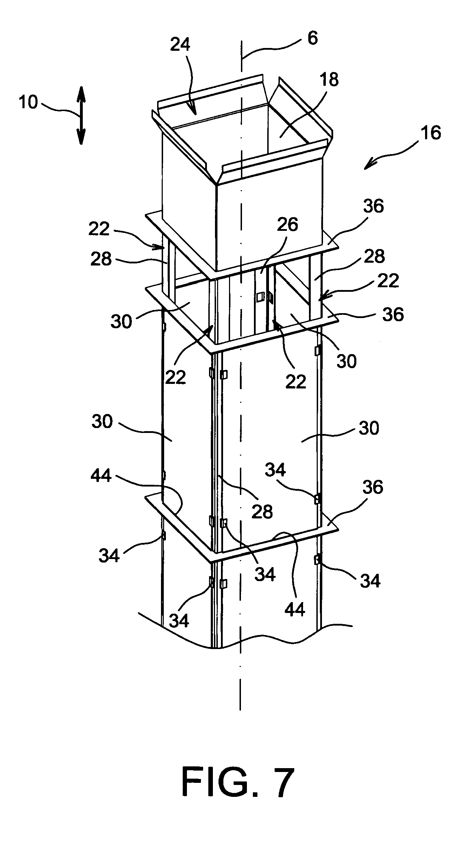

Selon un mode de réalisation encore plus préféré montré sur les figures 6 et 7, un seul plat 30 est prévu sur chacune des faces de la chemise, la longueur du plat étant sensiblement égale à celle de la partie active de l'assemblage. Ainsi, pour le passage à travers les structures 36 également au contact de la surface extérieure 28 des profilés 22, ces structures sont équipées, au niveau de leur chant intérieur, de renfoncements 44. Ce sont donc quatre renfoncements 44 qui sont respectivement prévus sur chacun des quatre côtés des structures 36, chacun de ces renfoncements 44 logeant donc un plat s'étendant de part et d'autre de la structure 36 concernée, selon la direction longitudinale.

Cette configuration est obtenue en faisant glisser les plats 30 à travers les renfoncements 44 entre les profils 22 et les structures de maintien 36, puis en les fixant sur la surface extérieure des profilés 22. Ainsi, la profondeur des renforcements 44 permet d'obtenir un jeu entre les plats 30 et les structures de maintien 36 de sorte que l'eau et les bulles d'air peuvent facilement transiter de part et d'autre de ces structures 36. Le fait d'avoir un seul plat 30 sur chacune des faces de la chemise permet de renforcer l'efficacité neutronique en supprimant toute discontinuité longitudinale des plats neutrophages.

Les autres caractéristiques du râtelier restent inchangées par rapport à celui décrit en référence aux figures 1 à 5.

Bien entendu, diverses modifications peuvent être apportées par l'homme du métier à l'invention qui vient d'être décrite, uniquement à titre d'exemples non limitatifs.

## Revendications

1. Râtelier de stockage (1) d'assemblages de combustible nucléaire (14), comprenant une structure rigide (2) définissant une pluralité d'alvéoles adjacentes (4) s'étendant parallèlement à une direction longitudinale (10) du râtelier, ledit râtelier comprenant en outre, dans au moins certaines desdites alvéoles, une chemise (16) définissant un logement (18) s'étendant parallèlement à ladite direction longitudinale, et destiné à recevoir un assemblage de combustible nucléaire, ladite chemise présentant, en section orthogonale à ladite direction longitudinale, une forme générale polygonale dont au moins certains des côtés comprennent des plats (30) en matériau neutrophage,
**caractérisé en ce que** ladite chemise comporte en outre :
- des profilés (22) formant chacun cornière, espacés les uns des autres et s'étendant parallèlement à ladite direction longitudinale en étant agencés au niveau d'au moins plusieurs angles de ladite section de forme générale polygonale, lesdits profilés servant de support de montage auxdits plats en matériau neutrophage (30) et présentant une surface intérieure (26) de définition dudit logement (18) permettant de guider un assemblage de combustible nucléaire lors de son chargement dans ledit logement (18), ainsi qu'une surface extérieure (28) opposée à ladite surface intérieure (26) et sur laquelle lesdits plats (30) en matériau neutrophage sont en appui ; et
- des moyens (36) de maintien desdits profilés entre-eux, lesdits moyens de maintien assurant un centrage de la chemise dans l'alvéole du râtelier et comprenant une pluralité de structures de maintien (36) entourant lesdits profilés (22) et espacées les unes des autres selon la direction longitudinale (10).

2. Râtelier (1) selon la revendication 1, **caractérisé en ce que** lesdites structures de maintien (36) sont fixées en appui sur la surface extérieure (28) desdits profilés (22), et **en ce qu'**au moins l'un desdits plats s'étend de part et d'autre d'au moins l'une desdites structures de maintien (36) selon la direction longitudinale (10), en passant dans un renfoncement pratiqué dans cette structure (36).

3. Râtelier (1) selon la revendication 2, **caractérisé en ce que** chaque plat (30) présente une longueur sensiblement identique à la longueur des profilés (22), selon la direction longitudinale.

4. Râtelier (1) selon la revendication 1, **caractérisé en ce que** chaque face de ladite chemise présente une pluralité de plats (30) en matériau neutrophage, adjacents selon la direction longitudinale.

5. Râtelier (1) selon la revendication 4, **caractérisé en ce que** chaque plat (30) s'étend entre deux structures de maintien (36) directement consécutives dans la direction longitudinale (10), ces structures (36) formant butée pour ledit plat (30) dans cette même direction.

6. Râtelier selon l'une quelconque des revendications précédentes, **caractérisé en ce que** chaque structure de maintien (36) est agencée dans un plan sensiblement orthogonal à ladite direction longitudinale.

7. Râtelier (1) selon l'une quelconque des revendications précédentes, **caractérisé en ce que** chaque profilé (22) prend, en section orthogonale à la direction longitudinale, une forme de L ou de V.

8. Râtelier (1) selon l'une quelconque des revendications précédentes, **caractérisé en ce que** chaque plat (30) est réalisé dans un matériau composite à matrice métallique comprenant du carbure de bore.

9. Râtelier (1) selon l'une quelconque des revendications précédentes, **caractérisé en ce que** chaque plat (30) est monté sur deux profilés (22) directement consécutifs, à l'aide de pattes de maintien (34) prévues sur lesdits profilés.

10. Râtelier (1) selon l'une quelconque des revendications précédentes, **caractérisé en ce que** la largeur (L3) de chaque plat (30) est strictement inférieure à la largeur (L1) de la face de la chemise qu'il forme partiellement.

## Claims

1. A storage rack (1) for nuclear fuel assemblies (14), comprising a rigid structure (2) defining a plurality of adjacent cells (4) extending parallel to a longitudinal direction (10) of the rack, said rack also comprising, in at least some of said cells, a sleeve (16) defining a cavity (18) extending parallel to said longitudinal direction, and intended to receive a nuclear fuel assembly, said sleeve having, in cross-section orthogonal to said longitudinal direction, a generally polygonal shape whereof at least some of the sides comprise plates (30) made from a neutron-absorbing material,
**characterized in that** said sleeve also includes:
- profiles (22) each forming a corner piece, spaced apart from each other and extending parallel to said longitudinal direction and arranged on at least several angles of said generally polygonal section, said profiles serving as a mounting bracket for said neutron-absorbing plates (30) and having an inner surface (26) defining said cavity (18) making it possible to guide a nuclear fuel assembly when it is loaded in said cavity (18), as well as an outer surface (28) opposite said inner surface (26) and on which said neutron-absorbing plates (30) bear; and
- a means (36) for maintaining said profiles therebetween, said maintenance means ensuring centering of the sleeve in the cell of the rack and comprising a plurality of maintenance structures (36) surrounding said profiles (22) and spaced apart from each other in the longitudinal direction (10).

2. The rack (1) according to claim 1, **characterized in that** said maintenance structures (36) are fixed bearing on the outer surface (28) of said profiles (22), and **in that** at least one of said plates extends on either side of at least one of said maintenance structures (36) in the longitudinal direction (10), passing in a recess formed in said structure (36).

3. The rack (1) according to claim 2, **characterized in that** each plate (30) has a length substantially identical to the length of the profiles (22), in the longitudinal direction.

4. The rack (1) according to claim 1, **characterized in that** each face of said sleeve has a plurality of plates (30) made from a neutron-absorbing material, adjacent in the longitudinal direction.

5. The rack (1) according to claim 4, **characterized in that** each plate (30) extends between two maintenance structures (36) that are directly consecutive in the longitudinal direction (10), these structures (36) forming a stop for said plate (30) **in that** same direction.

6. The rack according to any one of the preceding claims, **characterized in that** each maintenance structure (36) is arranged in a plane substantially orthogonal to said longitudinal direction.

7. The rack (1) according to any one of the preceding claims, **characterized in that** each profile (22) assumes, in cross-section orthogonal to the longitudinal direction, an L or V shape.

8. The rack (1) according to any one of the preceding claims, **characterized in that** each plate (30) is made from a metallic matrix composite material comprising boron carbide.

9. The rack (1) according to any one of the preceding claims, **characterized in that** each plate (30) is mounted on two directly consecutive profiles (22), using maintenance tabs (34) provided on said profiles.

10. The rack (1) according to any one of the preceding claims, **characterized in that** the width (L3) of each plate (30) is strictly smaller than the width (L1) of the face of the sleeve it partially forms.

## Patentansprüche

1. Gestell (1) zum Lagern bzw. Speichern von Kernbrennstoff-Anordnungen bzw. -aggregaten (14), mit einem starren Strukturgebilde bzw. Aufbau (2), welches(r) eine Mehrzahl von benachbarten Zellen (4) definiert, die sich parallel zu einer Längsrichtung (10) des Gestells erstrecken, das Gestell des weiteren umfassend, in wenigstens bestimmten der genannten Zeiten, einen Mantel (16), der einen sich parallel zu der Längsrichtung erstreckenden Aufnahmeraum definiert, der zur Aufnahme einer Kernbrennstoff-Anordnung bzw. eines Kernbrennstoff-Aggregats bestimmt ist, wobei der Mantel in einem zu der genannten Längsrichtung orthogonalen Schnitt eine allgemein polygonale Form aufweist, die an wenigstens bestimmten ihrer Seiten Platten bzw. Tafeln (30) aus einem neutrophagen, d.h. Neutronen absorbierenden Material umfaßt, **dadurch gekennzeichnet, daß** der genannte Mantel des weiteren umfaßt:
- jeweils eck-bzw. winkelbildende Profilteile (22), die in Abständen von einander angeordnet sind und sich parallel zu der genannten Längsrichtung erstrecken und jeweils am Ort wenigstens mehrerer Eck-bzw. Winkelpunkte des genannten allgemein polygonalen Querschnitts angeordnet sind und als Auflage für die Montage der genannten Platten bzw. Tafeln (30) aus neutrophagem bzw. Neutronen absorbierendem Material dienen und die mit ihrer Innenoberfläche bzw. Innenseite (26) den Aufnahmeraum (18) definieren und eine Führumg des Kernbrennstoff-Aggregats bei seiner Beschickung in den Aufnahmeraum (18) gestatten, und die der Innenoberfläche (26) gegenüberliegend eine Außenoberfläche bzw. Außenseite (28) aufweisen, gegen welche die genannten Platten (30) aus neutrophagem bzw. Neutronen absorbierendem Material anliegen; sowie
- Mittel (36) zur gegenseitigen Halterung der Profilteile untereinander, wobei die genannten Halterungsmittel eine Zentrierung des Mantels in der Zelle des Gestells gewährleisten und eine Mehrzahl von strukturellen Halterungsgebilden (36) umfassen, welche die Profilteile (22) umgeben und in gegenseitigen Abständen entlang der Längsrichtung (10) angeordnet sind.

2. Gestell (1) nach Anspruch 1, **dadurch gekennzeichnet, daß** die strukturellen Halterungsgebilde (36) gegen die Außenoberfläche bzw. Außenseite (28) der Profilteile (22) anliegend fixiert sind und daß wenigstens eine der genannten Platten bzw. Tafeln sich beidseits wenigstens eines der strukturellen Halterungsgebilde (36) entlang der Längsrichtung (10) erstreckt und durch eine in diesem Halterungsgebilde (36) vorgesehene Vertiefung verläuft.

3. Gestell (1) nach Anspruch 2, **dadurch gekennzeichnet, daß** jede Platte bzw. Tafel (30) eine Länge im wesentlichen gleich der Länge der Profilteile (22) in der Längsrichtung besitzt.

4. Gestell (1) nach Anspruch 1, **dadurch gekennzeichnet, daß** jeweils jede Seite bzw. Seitenfläche des Mantels eine Mehrzahl von Platten bzw. Tafeln (30) aus neutrophagem bzw. Neutronen absorbierendem Material einander benachbart entlang der Längsrichtung aufweist.

5. Gestell (1) nach Anspruch 4, **dadurch gekennzeichnet, daß** jeweils jede Platte bzw. Tafel (30) sich zwischen zwei direkt aufeinander folgenden Halterungsgebilden (36) in der Längsrichtung erstreckt, wobei diese Halterungsgebilde (36) jeweils einen Anschlag für die Platte bzw. Tafel (30) in dieser Richtung bildern.

6. Gestell nach einem beliebigen der vorhergehenden Ansprüche, **dadurch gekennzeichnet, daß** jeweils jedes strukturelle Halterungsgebilde (36) in einer zu der genannten Längsrichtung im wesentlichen orthogonalen Richtung angeordnet ist.

7. Gestell (1) nach einem beliebigen der vorhergehenden Ansprüche, **dadurch gekennzeichnet, daß** jeweils jedes Profilteil (22) in zu der Längsrichtung orthogonalem Querschnitt L- oder V- Form besitzt.

8. Gestell (1) nach einem beliebigen der vorhergehenden Ansprüche, **dadurch gekennzeichnet, daß** jeweils jede Platte bzw. Tafel (30) aus einem Verbundwerkstoff mit einer Borkarbid-haltigen Metallmatrix hergstellt ist.

9. Gestell (1) nach einem beliebigen der vorhergehenden Ansprüche, **dadurch gekennzeichnet, daß** jeweils jede Tafel bzw. Platte (30) auf zwei direkt aufeinander folgenden Profilteilen (22) montiert ist, mithilfe von an den betreffenden Profilteilen vorgesehenen Klauen (34).

10. Gestell (1) nach einem beliebigen der vorhergehenden Ansprüche, **dadurch gekennzeichnet, daß** die Breite (L3) jeder Platte bzw. Tafel (30) eindeutig kleiner als die Breite (L1) der Seitenfläche des Mantels ist, die sie teilweise bildet.
